# EUROPÄISCHE PATENTSCHRIFT

(11) **EP 2 894 379 B1**
(45) Veröffentlichungstag und Bekanntmachung des Hinweises auf die Patenterteilung: **22.02.2017**
(21) Anmeldenummer: 14199918.5
(22) Anmeldetag: 23.12.2014
(51) Int. Cl.: F16K 41/10, F16K 7/04, F16K 27/02

(54) **Ventil und Verfahren zum Verwenden eines Ventils**
Valve and method for using a valve
Soupape et procédé d'utilisation d'une soupape

(30) Priorität: 13.01.2014 DE 102014200387
(43) Veröffentlichungstag der Anmeldung: 15.07.2015
(73) Patentinhaber: ROBERT BOSCH GMBH, 70442 Stuttgart (DE)
(72) Erfinder: Tchikango Siagam, Adeline, 70197 Stuttgart (DE); Jaegle, Felix, 71254 Ditzingen (DE); Leonhardt, Ronny, 70839 Gerlingen (DE)

(56) Entgegenhaltungen:
- DE-A1- 19 522 488
- DE-A1- 19 941 594
- DE-B- 1 038 360
- DE-B- 1 235 084
- FR-A1- 2 816 387
- JP-A- S57 177 464
- US-A- 3 768 514
- US-A- 3 774 881
- US-A- 4 241 761
- US-A- 4 372 528
- US-A1- 2002 014 607

## Beschreibung

### Stand der Technik

Die vorliegende Erfindung bezieht sich auf ein Ventil und auf ein Verfahren zum Verwenden eines Ventils sowie ein entsprechendes Computerprogramm.

Ventile unterschiedlichster Funktion und Bauart werden zur Absperrung oder Regelung eines Fluidflusses durch ein das Ventil aufweisendes System eingesetzt.

Klassische Ventile mit einem Aktor, einem Dicht- bzw. Schließkörper und einem Gehäuse bestehen aus Einzelkomponenten, die in der Herstellung zusammengesetzt und montiert werden.

Die Druckschrift US 3,774,881 A offenbart ein Ventil mit folgenden Merkmalen: einem Aktor zum Steuern eines Durchflusses eines Fluids durch das Ventil; und einem Ventilgehäuse, wobei das Ventilgehäuse zumindest eine flexible Wand aufweist, die einteilig mit einem starren Restbereich einer Wandung des Ventilgehäuses gebildet ist und die ausgebildet ist, um von dem Aktor bewegt zu werden, um einen Fluidströmungsbereich in dem Ventilgehäuse zwischen einer Einlassöffnung zum Einlassen des Fluids in das Ventil und einer Auslassöffnung zum Auslassen des Fluids aus dem Ventil zu verändern, wobei die flexible Wand einen der Einlassöffnung gegenüberliegenden Einstülpungsabschnitt des Ventilgehäuses bildet, wobei ein Führungselement des Aktors in dem Einstülpungsabschnitt angeordnet und ausgebildet ist, um einen Boden des Einstülpungsabschnitts entgegen einer Strömungsrichtung des Fluids in dem Fluidströmungsbereich in die Einlassöffnung zu drücken, um die Einlassöffnung zu schließen.

Die Druckschrift DE 10 38 360 B offenbart ein Absperrventil mit einem Faltenbalg.

Die Druckschrift FR 2 816 387 A1 offenbart ein flüssigkeitsdichtes Absperrventil für ein Transportgebinde für ein toxisches Fluid.

### Offenbarung der Erfindung

Vor diesem Hintergrund werden mit dem hier vorgestellten Ansatz ein Ventil, ein Verfahren zum Verwenden eines Ventils sowie ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Eine Konzeption eines Ventilgehäuses mit einer flexiblen Wandung zum Beeinflussen eines Fluidstroms durch ein Ventil ermöglicht eine hermetische Abdichtung des Ventilgehäuses gegenüber einem Aktor und gegebenenfalls weiteren Ventilkomponenten des Ventils.

Ein gemäß diesem Ansatz aufgebautes Ventil stellt also eine Einzelkomponente dar, die Ventilfunktionalitäten realisieren kann. Bei einem derartigen Ventil kann der Dichtkörper direkt mit in das Gehäuse integriert werden, wodurch auf zusätzliche Dichtstellen zum Aktor verzichtet werden kann.

In einer Weiterbildung des hier vorgeschlagenen Konzepts kann auch eine Federfunktion des Ventils bzw. können Anteile der Federfunktionalität ebenfalls in das Gehäuse integriert werden, beispielsweise mittels einer Ausführung des Schließkörpers als Faltenstruktur oder der Integration eines Faltenbalges in das Gehäuse.

Bei einem gemäß dem hier vorgeschlagenen Konzept gestalteten Ventil kann die Ansammlung von Verunreinigungen in Spalten, Fügestellen sowie Totwassergebieten vermieden werden. Das Konzept gewährleistet darüber hinaus eine vollständige Dichtheit des Strömungsraumes. Auf zusätzliche Dichtelemente kann vollständig verzichtet werden. Die Notwendigkeit zur Durchführung von Kabeln zur Bestromung eines Aktors entfällt. Funktionelle Probleme bei der Betätigung des Schließkörpers, z. B. Dichtring bedingte Hysteresen im Kraft-Hub-Verlauf des Ventils, können reduziert bzw. verhindert werden. Das hierin vorgeschlagene Ventil kann in Integralbauweise hergestellt werden, wodurch die Anzahl benötigter Teile sowie der Montageaufwand reduziert werden können.

Durch die Möglichkeit der Fertigung des hierin vorgeschlagenen Ventils z. B. durch additive Verfahren oder Funktionsgussverfahren und die damit verbundenen Freiheiten in der Gestaltung können die Fluidräume strömungsmechanisch optimiert gestaltet werden. Auf eventuell problematische Übergangs- und Fügungsbereiche bzw. Spalten, Hinterschnitte und Totwassergebiete kann verzichtet werden. Damit können Verunreinigungen durch sich in Spalten absetzende Partikel und Ablagerungen von Fällungsprodukten wirksam vermieden werden.

Es wird ein Ventil mit folgenden Merkmalen vorgestellt:
einem Aktor zum Steuern eines Durchflusses eines Fluids durch das Ventil; und
einem Ventilgehäuse, wobei das Ventilgehäuse zumindest eine flexible Wand aufweist, die ausgebildet ist, um von dem Aktor bewegt zu werden, um einen Fluidströmungsbereich in dem Ventilgehäuse zwischen einer Einlassöffnung zum Einlassen des Fluids in das Ventil und einer Auslassöffnung zum Auslassen des Fluids aus dem Ventil zu verändern.

Das Ventil kann zum Absperren oder Steuern eines Durchflusses von Fluiden eingesetzt werden. Unter dem Aktor kann ein Antriebselement des Ventils verstanden werden, das geeignet ist, um ein elektrisches Signal in eine mechanische Bewegung umzusetzen, hier, um die flexible Wand des Ventilgehäuses so zu bewegen, dass ein an der flexiblen Wand entlang strömender Massenstrom des Fluids vergrößert oder verkleinert bzw. unterbrochen oder zum Durchfluss durch das Ventil freigegeben werden kann.

Das Ventilgehäuse kann ausgebildet sein, um das Fluid temporär aufzunehmen und durch das Ventil zu leiten. Das Ventilgehäuse kann als einzige Öffnungen die Einlassöffnung und die Auslassöffnung bzw. eine Mehrzahl an Einlassöffnungen und Auslassöffnungen aufweisen und im Übrigen - insbesondere gegenüber dem Aktor - hermetisch, also fluiddicht, abgeschlossen sein.

Die flexible Wand bildet einen Abschnitt des Ventilgehäuses. Die flexible Wand ist einstückig mit einem starren Restbereich einer Wandung des Gehäuses gebildet. Es kann dabei ein abrupter oder ein fließender Übergang zwischen dem starren und bewegbaren bzw. verstellbaren Bereich der Ventilgehäusewand vorgesehen sein. Bei der Herstellung ist kein Arbeitsschritt vorgegeben, bei dem die flexible Wand mit dem starren Wandabschnitt des Ventilgehäuses verbunden wird. Gemäß einer Ausführungsform kann die flexible Wand das Ventilgehäuse auch im Kompletten bilden. Die flexible Wand kann im Sinne eines Schließkörpers des Ventils betrachtet werden. Die flexible Wand kann ausgebildet sein, um sich ansprechend auf einen Druck durch den Aktor elastisch zu bewegen bzw. zu verbiegen und sich bei einer Wegnahme des Drucks selbsttätig wieder in einen Urzustand zurückzubewegen. Die Bewegung der flexiblen Wand kann sich dabei durch eine Biegung oder Dehnung zumindest eines Abschnitts der flexiblen Wand ausdrücken. Alternativ kann die Flexibilität der flexiblen Wand in der Form vorliegen, dass sie ansprechend auf einen angelegten Druck ihre Form ändert und bei Wegnahme des Drucks wieder in ihre ursprüngliche Form zurückkehrt.

Bei dem Fluidströmungsbereich kann es sich um einen Teilbereich des Ventilgehäuses handeln, der die Einlassöffnung und die Auslassöffnung aufweist. Die effektivste Strömung des Fluids in dem Ventilgehäuse kann in diesem Bereich stattfinden. Unter dem Verändern des Fluidströmungsbereichs kann ein Vergrößern oder Verkleinern bzw. ein Verschließen oder ein Öffnen des Fluidströmungsbereichs verstanden werden. Es kann sich bei der Einlassöffnung um den Hochdruckanschluss und bei der Auslassöffnung um den Niederdruckanschluss des Ventils handeln.

Gemäß einer Ausführungsform des Ventils kann der Aktor außerhalb des Ventilgehäuses benachbart zu der flexiblen Wand des Ventilgehäuses angeordnet sein. Auf diese Weise kann der Aktor in geeigneter Weise auf die flexible Wand einwirken, ohne dass dafür ein Durchgreifen der flexiblen Wand durch den Aktor erforderlich wäre. So kann vorteilhafterweise auf eine aufwendige Abdichtung eines Inneren des Ventilgehäuses gegenüber dem Aktor verzichtet werden.

Die flexible Wand bildet einen der Einlassöffnung gegenüberliegenden Einstülpungsabschnitt des Ventilgehäuses. Ein Führungselement des Aktors ist in dem Einstülpungsabschnitt angeordnet und ausgebildet, um einen Boden des Einstülpungsabschnitts entgegen einer Strömungsrichtung des Fluids in dem Fluidströmungsbereich in die Einlassöffnung zu drücken, um die Einlassöffnung zu schließen. Der Einstülpungsabschnitt kann ausgebildet sein, um sich in das Innere des Ventilgehäuses hinein zu erstrecken. Der Boden des Einstülpungsabschnitts kann hier im Sinne eines Schließkörpers - beispielsweise eines Sitzventils - zum vollständigen oder teilweisen Verschließen der Einlassöffnung eingesetzt werden. Das Führungselement kann bei dieser Ausführungsform des Ventils stabförmig ausgebildet sein und mit einem Ende auf dem Boden des Einstülpungsabschnitts aufstehen und mit einem anderen Ende sich über den Einstülpungsabschnitt hinaus erstrecken und von dem Ventilgehäuse vorstehen.

Diese Ausführungsform des Ventils ermöglicht eine sehr fein abstufbare Regulierung des Fluidvolumenstroms in dem Fluidströmungsbereich direkt an der relevanten Position, nämlich der Einlassöffnung in das Ventilgehäuse, bei gleichzeitig gegebener hermetischer Abdichtung des Ventilgehäuses gegenüber dem Aktor.

Insbesondere kann der Einstülpungsabschnitt eine ziehharmonikaartig gefaltete Faltenstruktur aufweisen. Die Faltenstruktur kann ausgebildet sein, um in Richtung der Einlassöffnung streckbar zu sein. Das Strecken der Faltenstruktur kann über eine Bewegung der Führungsstange des Aktors in Richtung der Einlassöffnung erfolgen. Die Faltenstruktur kann ausgebildet sein, um sich ansprechend auf ein Zurückziehen der Führungsstange aus der Einstülpung selbsttätig zusammenzuziehen und die Einlassöffnung freizugeben. Mit dieser Ausführungsform kann vorteilhafterweise eine Federwirkung, basierend auf der die Einlassöffnung geschlossen oder geöffnet gehalten werden kann, bereitgestellt werden, ohne dafür einen Einsatz eines zusätzlichen Elements erforderlich zu machen. So können Fertigungskosten und Bauraum gespart werden und zudem Totwassergebiete innerhalb des Ventilgehäuses reduziert bzw. eliminiert werden.

Gemäß einer Ausführungsform kann das Führungselement fix mit dem Einstülpungsabschnitt verbunden sein. So kann ein Kraftübertrag von dem Aktor auf den Boden der Einstülpung, um diesen zu bewegen, besonders effektiv erfolgen.

Gemäß einer weiteren Ausführungsform kann die flexible Wand ausgebildet sein, um von dem Aktor quer zu einer Strömungsrichtung des Fluids in dem Fluidströmungsbereich in Richtung eines Inneren des Ventilgehäuses gedrückt zu werden. Auf diese Weise kann mittels der flexiblen Wand ein effektiver Querschnitt des Fluidströmungsbereichs verringert werden. Diese Ausführungsform des Ventils ist besonders einfach und kostengünstig realisierbar.

Beispielsweise kann dabei die flexible Wand quer zu der Strömungsrichtung des Fluids in dem Fluidströmungsbereich zumindest einen Abschnitt des Fluidströmungsbereichs vollumfänglich umgeben. Der Aktor kann als ein die flexible Wand vollumfänglich umgebender Ringaktor ausgebildet sein. Diese Ausführungsform kann eine besonders gleichmäßige Reduzierung bzw. Vergrößerung eines Fluidvolumenstroms zwischen der Einlassöffnung und der Auslassöffnung gewährleisten. Die Funktionalität des Ventils beeinträchtigende Verwirbelungen des Fluids in dem Fluidströmungsbereich können so wirkungsvoll verringert werden.

Es wird ein Verfahren zum Verwenden eines Ventils vorgestellt, wobei das Ventil einen Aktor zum Steuern eines Durchflusses eines Fluids durch das Ventil und ein Ventilgehäuse aufweist, wobei das Ventilgehäuse zumindest eine flexible Wand aufweist, die ausgebildet ist, um von dem Aktor bewegt zu werden, wobei das Verfahren den folgenden Schritt aufweist:
Ausgeben eines Steuersignals an den Aktor, um zu bewirken, dass der Aktor die flexible Wand bewegt, um einen Fluidströmungsbereich in dem Ventilgehäuse zwischen einer Einlassöffnung zum Einlassen des Fluids in das Ventil und einer Auslassöffnung zum Auslassen des Fluids aus dem Ventil zu verändern.

Eine Ausführungsform des Verfahrens kann zum Betreiben eines Ventils gemäß einer der oben aufgeführten Ausführungsformen angewandt werden. Auch durch diese Ausführungsvariante der Erfindung in Form eines Verfahrens kann die der Erfindung zugrunde liegende Aufgabe schnell und effizient gelöst werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung und/oder Ansteuerung der Schritte des Verfahrens nach einer der vorstehend beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Darstellung eines Ventils gemäß dem Stand der Technik;
Fig. 2 eine schematische Darstellung eines Ventils mit Dichtring, gemäß dem Stand der Technik;
Fig. 3 eine schematische Darstellung eines Ventils mit flexibler Wand, gemäß einem Ausführungsbeispiel der vorliegenden Erfindung;
Fig. 4 eine perspektivische Darstellung des Ventils mit flexibler Wand aus

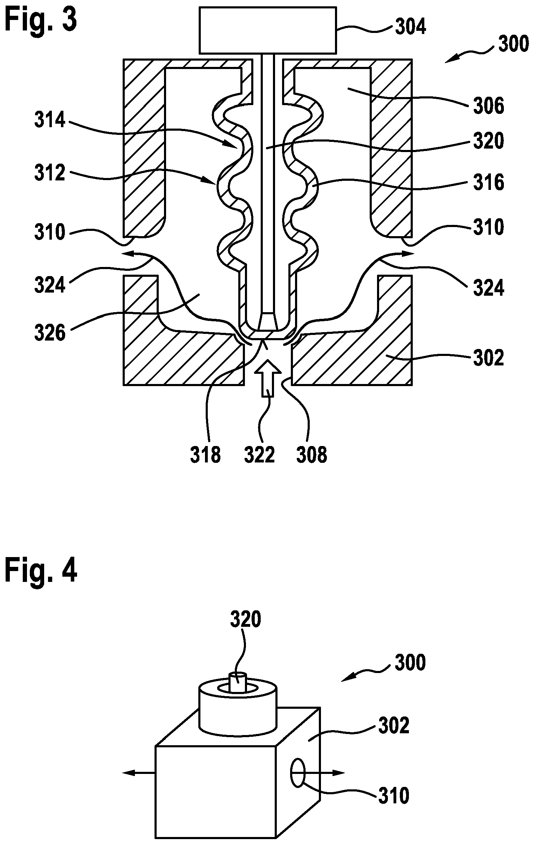

Fig. 3, gemäß einem Ausführungsbeispiel der vorliegenden Erfindung;

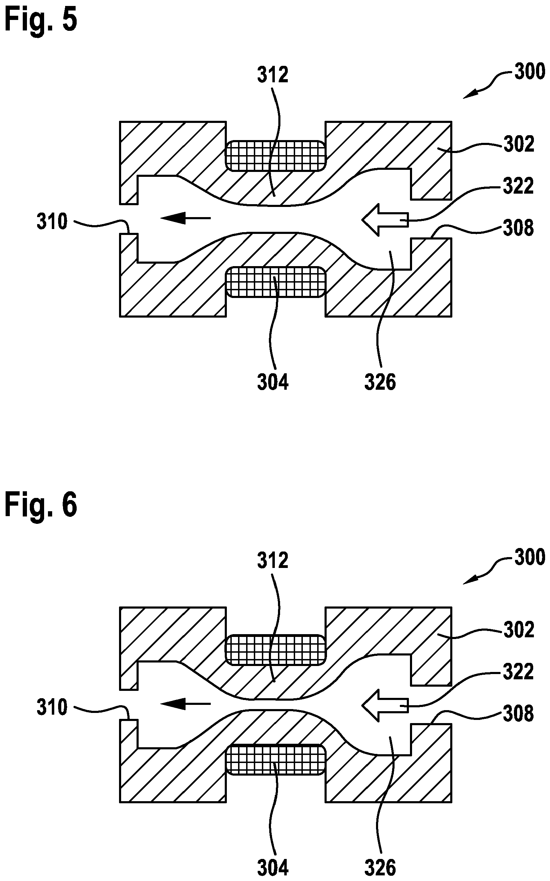

Fig. 5 eine schematische Darstellung eines Ventils mit flexibler Wand in einer ersten Position, gemäß einem nicht erfindungsgemäßen Ausführungsbeispiel;
Fig. 6 eine schematische Darstellung des Ventils mit flexibler Wand aus Fig. 5 in einer zweiten Position, gemäß einem nicht erfindungsgemäßen Ausführungsbeispiel; und

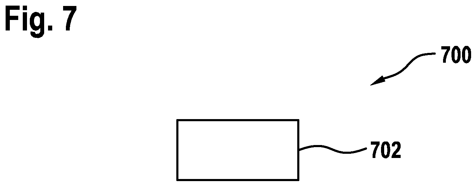

Fig. 7 ein Ablaufdiagramm eines Verfahrens zum Verwenden eines Ventils mit flexibler Wand, gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

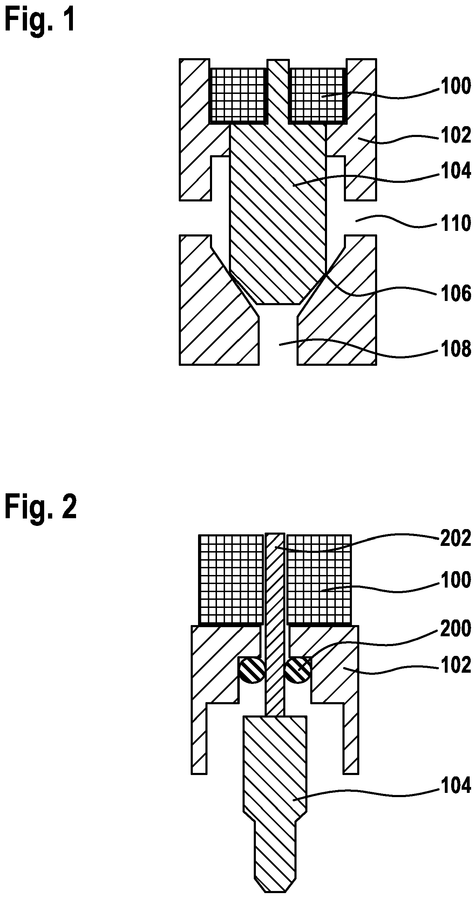

Fig. 1 zeigt eine schematische Darstellung eines klassischen Ventils zum Steuern eines Fluidflusses gemäß dem Stand der Technik. Das Ventil setzt sich aus einem Aktor 100, einem Gehäuse 102 und einem Schließkörper 104 zusammen. Ein Abschnitt des Gehäuses 102 bildet einen Sitzbereich 106 für den Schließkörper einer oberen Druckkammer 106, einem Sitzbereich für den Schließkörper 104. Über einen Hochdruckanschluss im unteren Bereich des Ventils gelangt ein Fluid in eine erste Druckkammer 108 des Ventils und verlässt das Ventil bei geöffnetem Ventil über sich gegenüberliegende, eine zweite Druckkammer 110 öffnende Niederdruckanschlüsse.

Bei dem in Fig. 1 gezeigten klassischen Ventil handelt es sich bei dem Aktor 100, dem Schließkörper 104 und dem Gehäuse 102 um Einzelkomponenten, die in der Herstellung zusammengesetzt und montiert werden. Anders als in Fig. 1 gezeigt, kann der Aktor 100 des klassischen Ventils auch innerhalb des Fluidraumes platziert sein, sodass nur die Durchführung von Kabeln, nicht aber von bewegten Teilen durch das Gehäuse 102 erforderlich ist. Voraussetzung für diese Konzeption ist, dass der Aktor 100, z. B. eine Magnetspule, in dem vorhandenen Medium sicher betrieben werden kann.

Fig. 2 zeigt eine schematische Darstellung eines klassischen Ventils gemäß dem Stand der Technik mit einer Dichtung 200 zwischen Schließkörper 104 und Aktor 100. Die Dichtung 200 ist hier als ein O-Ring ausgeführt und ausgebildet, um die Führung des beweglichen Schließkörpers 104 mittels einer aus dem fluidgefüllten Druckraum geführten und das Gehäuse 102 durchgreifenden Führungsstange 202 zum Aktor 100 hin abzudichten.

Fig. 3 zeigt in einer schematischen Schnittdarstellung ein Ventil 300 gemäß einem Ausführungsbeispiel der vorliegenden Erfindung. Das Ventil 300 setzt sich aus einem Ventilgehäuse 302 und einem Aktor 304 zusammen. Das Ventilgehäuse 302 ist hier quaderförmig ausgebildet und formt eine Aufnahmekammer 306 des Ventils 300 zum temporären Aufnehmen eines Fluids. Bei dem in Fig. 3 gezeigten Ausführungsbeispiel weist der Gehäuseblock 302 eine Einlassöffnung 308 zum Einlassen eines Fluids in die Aufnahmekammer 306 und zwei Auslassöffnungen 310 zum Auslassen des Fluids aus der Aufnahmekammer 306 auf.

Insbesondere weist das Ventilgehäuse 302 eine flexible Wand 312 auf. Die flexible Wand 312 besteht aus einem dehnbaren bzw. elastischen Material und ist hier als eine schlauchartige, am Ende geschlossene, Einstülpung 314 in ein Inneres bzw. die Aufnahmekammer 306 des Ventilgehäuses 302 ausgeformt. Ein Restbereich des Ventilgehäuses 302 ist hier starr ausgebildet. Bei dem in Fig. 3 gezeigten Ausführungsbeispiel des Ventils 300 ist das Ventilgehäuse 302 inklusive der die Einstülpung 314 bildenden flexiblen Wand 312 einstückig gebildet. Der starre Bereich der Ventilwandung geht in den flexiblen Bereich 312 über. Das Ventilgehäuse 302 inklusive der flexiblen Wand 312 ist fluiddicht gegenüber dem Aktor 304 abgedichtet.

Bei dem in Fig. 3 gezeigten Ausführungsbeispiel des Ventils 300 weist die Einstülpung 314 eine ziehharmonikaartige Faltenstruktur 316 im Sinne eines Faltenbalges auf. Die Faltenstruktur 316 erlaubt eine Formänderung bzw. Verstellbarkeit der Einstülpung 314, indem sie gestreckt und wieder zusammengeschoben, also verkürzt werden kann, ohne eine signifikante Materialdehnung erforderlich zu machen. Bei dem in Fig. 3 gezeigten Ausführungsbeispiel bildet die Einstülpung 314 quasi den Schließkörper des Ventils 300 und ist entsprechend gegenüber der Einlassöffnung 308 des Ventilgehäuses 302 angeordnet. Mit einer Streckung der Faltenstruktur 316 der Einstülpung 314 kann ein Boden 318 der Einstülpung in die Einlassöffnung 308 eingebracht werden und diese so verschließen. Über die Faltenstruktur 316 wird der flexiblen Wand 312 eine Federwirkung verliehen. Bei dem in Fig. 3 gezeigten Ausführungsbeispiel des Ventils 300 ist die Einstülpung 314 ausgebildet, um in einer Ruheposition basierend auf der ihr innewohnenden Federwirkung den Boden 318 der Einstülpung 314 in die Einlassöffnung 308 zu drücken und so das Ventil 300 zu schließen und in einer von dem Aktor 304 verursachten Bewegung den Boden 318 aus der Einlassöffnung 308 herauszuziehen und so das Ventil 300 zu öffnen. Auch eine umgekehrte Ausführung ist denkbar, bei der die Faltenbalg-Einstülpung 314 in ihrer Ruheposition die Einlassöffnung 308 freigibt und so das Ventil 300 offen hält.

Der Aktor 304 ist außerhalb des Ventilgehäuses 302 angeordnet und durchgreift dieses an keiner Stelle. Der Aktor 304 ist ausgebildet, um einen Durchfluss eines Fluids durch das Ventil 300 zu steuern. Dazu empfängt der Aktor 304 über eine geeignete Schnittstelle ein elektrisches Steuersignal und wandelt die elektrische Energie in eine kinetische Energie zum Bewegen des Bodens 318 der Einstülpung 314 gegenüber der Einlassöffnung 308 um. Bei dem in Fig. 3 gezeigten Ausführungsbeispiel weist der Aktor 304 ein Führungselement 320 auf. Das Führungselement 320 ist stabartig ausgeformt und erstreckt sich von dem Aktor 304 in die Einstülpung 314 bis zum Boden 318 der Einstülpung 314 hinein und verbindet so den Aktor 304 mit dem von ihm hier primär zu bewegenden Bereich der flexiblen Wand 312, hier mit dem Boden 318 der Einstülpung 314. Bei dem in Fig. 3 gezeigten Ausführungsbeispiel ist das Führungselement 320 fix mit dem Boden 318 der Einstülpung 314 verbunden, sodass jede vom Aktor 304 verursachte Bewegung des Führungselements bzw. der Führungsstange 320 direkt auf die Einstülpung 314 übertragen wird.

Bei dem in Fig. 3 gezeigten Ausführungsbeispiel des Ventils 300 befindet sich die Einlassöffnung 306 mittig an einer Unterseite des Ventilgehäuses 302. Der Boden 318 der Einstülpung 314 mit dem auf ihm angeordneten Führungselement 320 befindet sich direkt gegenüber der Einlassöffnung 308. Die Einlassöffnung 308 bildet hier den Hochdruckanschluss des Ventils 300, sodass hier das Fluid in einer mittels eines fetten Pfeils gekennzeichneten Strömungsrichtung 322 in das Ventilgehäuse 302 einströmt. Unter der Strömungsrichtung 322 ist hier eine Hauptströmungs- bzw. Einströmungsrichtung des Fluids bezüglich des Ventils 300 zu verstehen. Wie die Darstellung in Fig. 3 zeigt, ist die hier als die Einstülpung 314 ausgebildete flexible Wand 312 gegenüber der Einlassöffnung 308 angeordnet entgegen der Strömungsrichtung 322 ausgerichtet. Die z.B. zwei Auslassöffnungen 308 befinden sich einander gegenüberliegend in zwei sich gegenüberliegenden Seitenwänden des Ventilgehäuses 302. Die in der Fig. 3 dargestellten zwei Auslassöffnungen 308 sind hier nur beispielhaft gewählt. Gegebenenfalls kann es auch nur eine sein, sofern ausreichend groß, oder auch mehr als zwei, sofern eine Homogenisierung der Strömungstopologie wichtig ist. Zwei dünne Pfeile kennzeichnen eine weitere Strömungsrichtung 324 des Fluids aus dem Ventil 302 heraus.

Ein Abschnitt des Ventilgehäuses 302 zwischen der Fluideinlassöffnung 308 und den Fluidauslassöffnungen 310 bildet einen Fluidströmungsbereich 326, der über eine Position der Einstülpung 314 verändert, also vergrößert oder verkleinert wird. In Fig. 3 ist eine Position der flexiblen Wand 312 gezeigt, in der der Aktor 304 über die Führungsstange 320 ein Zusammenziehen der Faltenstruktur 316 in der Strömungsrichtung 322 um einen vorbestimmten Grad bewirkt hat. Entsprechend sitzt der Boden 318 der Einstülpung 314 nahe der Einlassöffnung 308 und verschließt die Einlassöffnung 308 nicht ganz. Ein geringer Massenstrom des Fluids kann den Fluidströmungsbereich 326 passieren und in der weiteren Strömungsrichtung 324 über die Auslassöffnungen 310 das Ventil verlassen. Der Fluidstrom im Fluidströmungsbereich 326 ist also stark gedrosselt.

Das in Fig. 3 schematisch gezeigte Ausführungsbeispiel des einteiligen Ventils 300 ist beispielhaft als ein Sitzventil ausgeführt. Die Federfunktion bzw. Anteile der Federfunktionalität werden hier über die Ausführung des Schließkörpers als Faltenstruktur 316 bzw. die Integration eines Faltenbalges in das Gehäuse 302 integriert. Die Führungsstange 320 überträgt die Aktorkraft auf die hier den Schließkörper bildende Einstülpung 314. Das einteilige Ventil 300 zeichnet sich dadurch aus, dass sein Fluidraum 306 hermetisch vom Aktor 304 und weiteren Ventilkomponenten im Kraftfluss, wie z. B. Federn, abgetrennt ist. Bei dem Ventil 300 sind der Schließkörper, die Feder sowie die Führung Bestandteil des Gehäuses 302.

Fig. 4 zeigt eine perspektivische Darstellung des beispielhaften Ventils 300 aus Fig. 3. Aus der Darstellung ist die Quaderform des Ventils bzw. Ventilmoduls 300 gut zu ersehen. Gezeigt ist ferner das Führungselement 320, dessen oberes Ende aus dem Ventilgehäuse 302 herausragt, um von dem Aktor angesteuert werden zu können. Ferner ist eine der seitlichen Auslassöffnungen 310 zu sehen.

Das Ventil 300 kann z.B. durch additive Verfahren oder Funktionsgussverfahren hergestellt werden. Durch die damit verbundenen Freiheiten in der Gestaltung sind die Fluidräume strömungsmechanisch optimiert, z. B.: druckverlustminimiert und/oder scherungsminimiert, gestaltbar.

Fig. 5 zeigt eine schematische Querschnittdarstellung eines weiteren Ausführungsbeispiels des Ventils 300 mit flexibler Wand. Hier ist die flexible Wand 312 als ein mittiger elastischer Abschnitt des Ventilgehäuses 302 ausgeführt. Der elastische Abschnitt 312 ist quer zu der Strömungsrichtung 322 des Fluids vollumfänglich an dem Ventilgehäuse 302 ausgebildet. Um die flexible Wand 312 herum ist der Aktor 304 benachbart zu der flexiblen Wand 312 als ein Ringaktor angeordnet. Das in Fig. 5 gezeigte Ausführungsbeispiel des Ventils 300 weist neben der Einlassöffnung 308 ledigliche eine Auslassöffnung 310 auf die in einer der Einlassöffnung 308 gegenüberliegenden Seite des Ventils 300 angeordnet ist.

Wie die Darstellung in Fig. 5 zeigt, ist die flexible Wand 312 ausgebildet, um von dem Ringaktor 304 quer zu der Fluidströmungsrichtung 322 vollumfänglich gleichmäßig nach innen gedrückt zu werden und so einen effektiven Querschnitt des Fluidströmungsraumes 326 zwischen der Einlassöffnung 308 und der Auslassöffnung 310 zu verändern, hier zu verkleinern.

In der Darstellung in Fig. 5 ist das Ventil 300 in einer ersten Drosselposition gezeigt, in der der Ringaktor 304 die flexible Wand 312 geringfügig in den Fluidströmungsraum 326 drückt und so eine leichte Drosselung des Fluidstromes bewirkt.

Fig. 6 zeigt in einer weiteren schematischen Querschnittdarstellung die Ausführungsvariante des Ventils 300 als Drossel mit flexibler Wand 312 in einer zweiten Drosselposition. Hier sind sich gegenüberliegende Abschnitte der flexiblen Wand 312 von dem Ringaktor 304 fast vollständig zusammengedrückt. Die Drosselwirkung auf das den Fluidströmungsraum 326 durchströmende Fluid ist stark.

Neben der Ausführung mit dem Ringaktor 304 besteht eine weitere Möglichkeit der Gestaltung der Drosselstelle in der aktiven Verstellung der flexiblen Wand 312 mittels eines Stempels. Auch in dieser in den Figuren nicht gezeigten Ausführung kann die effektive Querschnittsfläche des Fluidströmungsraumes 326 dem jeweiligen Betriebspunkt angepasst werden.

Anhand der Darstellungen in den Figuren 3 bis 6 wird ein Ventilkonzept vorgestellt, das vollständig hermetisch dicht ausgeführt ist, aus einem Teil besteht und bei dem die einzelnen Funktionsmodule und Funktionen ins Gehäuse integriert sind.

Fig. 7 zeigt ein Ablaufdiagramm eines Ausführungsbeispiels eines Verfahrens 700 zum Verwenden eines Ventils mit flexibler Wand. Das Verfahren 700 kann zum Betätigen eines einteiligen Ventils mit verstellbarer Wandung gemäß den in den Figuren 3 bis 6 vorgestellten Ausführungsbeispielen ausgeführt werden. In einem Schritt 702 wird ein Steuersignal an einen Aktor zum Steuern eines Durchflusses eines Fluids durch ein Ventilgehäuse eines Ventils ausgegeben. Ansprechend auf das Steuersignal bewirkt der Aktor eine Bewegung bzw. Verstellung einer flexiblen Wand des Ventilgehäuses, um so einen Fluidströmungsbereich in dem Ventilgehäuse zwischen einer Fluideinlassöffnung und einer Fluidauslassöffnung des Ventils zu verändern.

Mit dem hierin vorgestellten Ventilkonzept können Schalt- und ggf. auch Proportionalventile mit dem Fokus auf Anwendungen im Niederdruckbereich realisiert werden, z. B. Pilotventile in servomechanischen Ventilen, Sterilventile für die Anwendung im medizinischen und im Lebensmittelbereich (z. B. Algenzucht, Abfüllanlagenproduktion), Ventile für Fluide, die besonders kritisch hinsichtlich Kriechverhalten und Ablagerungen sind, z. B. wässrige Harnstofflösung für Abgasnachbehandlungssysteme, oder Ventile mit hundertprozentiger Dichtheitsanforderung, z. B. bei Erdgasanwendungen stationär oder im Fahrzeug. Weitere Einsatzmöglichkeiten ist das Steuern von Fluidmengen in Abfüllanlagen und das Gewährleisten definierter Massenströme ohne dass das Fluid in Hinterschnitten kontaminiert wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Ventil (300) mit folgenden Merkmalen:
einem Aktor (304) zum Steuern eines Durchflusses eines Fluids durch das Ventil (300); und
einem Ventilgehäuse (302), wobei das Ventilgehäuse (302) zumindest eine flexible Wand (312) aufweist, die einstückig mit einem starren Restbereich einer Wandung des Ventilgehäuses (302) gebildet ist und bei der Herstellung kein Arbeitsschritt vorgegeben ist, bei dem die flexible Wand mit dem starren Wandabschnitt des Ventilgehäuses verbunden wird und die ausgebildet ist, um von dem Aktor (304) bewegt zu werden, um einen Fluidströmungsbereich (326) in dem Ventilgehäuse (302) zwischen einer Einlassöffnung (308) zum Einlassen des Fluids in das Ventil (300) und einer Auslassöffnung (310) zum Auslassen des Fluids aus dem Ventil (300) zu verändern,
wobei die flexible Wand (312) einen der Einlassöffnung (308) gegenüberliegenden Einstülpungsabschnitt (314) des Ventilgehäuses (302) bildet, wobei ein Führungselement (320) des Aktors (304) in dem Einstülpungsabschnitt (314) angeordnet und ausgebildet ist, um einen Boden (318) des Einstülpungsabschnitts (314) entgegen einer Strömungsrichtung (322) des Fluids in dem Fluidströmungsbereich (326) in die Einlassöffnung (308) zu drücken, um die Einlassöffnung (308) zu schließen.

2. Ventil (300) gemäß Anspruch 1, **dadurch gekennzeichnet, dass** der Aktor (304) außerhalb des Ventilgehäuses (302) benachbart zu der flexiblen Wand (312) des Ventilgehäuses (302) angeordnet ist.

3. Ventil (300) gemäß Anspruch 1 oder 2, **dadurch gekennzeichnet, dass** der Einstülpungsabschnitt (314) eine ziehharmonikaartig gefaltete Faltenstruktur (316) aufweist, die ausgebildet ist, um in Richtung der Einlassöffnung (308) streckbar zu sein.

4. Ventil (300) gemäß einem der Ansprüche 1 bis 3, **dadurch gekennzeichnet, dass** das Führungselement (320) an dem Einstülpungsabschnitt (314) fixiert ist.

5. Ventil (300) gemäß einem der vorangegangenen Ansprüche, **dadurch gekennzeichnet, dass** das Ventilgehäuse (302) als eine gegenüber dem Aktor (304) fluiddicht abgeschlossene Aufnahmekammer (306) zum temporären Aufnehmen des Fluids ausgebildet ist.

6. Verfahren (700) zum Verwenden eines Ventils (300), wobei das Ventil (300) einen Aktor (304) zum Steuern eines Durchflusses eines Fluids durch das Ventil (300) und ein Ventilgehäuse (302) aufweist, wobei das Ventilgehäuse (302) zumindest eine flexible Wand (312) aufweist, die einstückig mit einem starren Restbereich einer Wandung des Ventilgehäuses (302) gebildet ist und bei der Herstellung kein Arbeitsschritt vorgegeben ist, bei dem die flexible Wand mit dem starren Wandabschnitt des Ventilgehäuses verbunden wird und die ausgebildet ist, um von dem Aktor (304) bewegt zu werden, wobei die flexible Wand (312) einen der Einlassöffnung (308) gegenüberliegenden Einstülpungsabschnitt (314) des Ventilgehäuses (302) bildet, wobei ein Führungselement (320) des Aktors (304) in dem Einstülpungsabschnitt (314) angeordnet und ausgebildet ist, um einen Boden (318) des Einstülpungsabschnitts (314) entgegen einer Strömungsrichtung (322) des Fluids in dem Fluidströmungsbereich (326) in die Einlassöffnung (308) zu drücken, um die Einlassöffnung (308) zu schließen, wobei das Verfahren (700) den folgenden Schritt aufweist:
Ausgeben (702) eines Steuersignals an den Aktor (304), um zu bewirken, dass der Aktor (304) die flexible Wand (312) bewegt, um einen Fluidströmungsbereich (326) in dem Ventilgehäuse (302) zwischen einer Einlassöffnung (308) zum Einlassen des Fluids in das Ventil (300) und einer Auslassöffnung (310) zum Auslassen des Fluids aus dem Ventil (300) zu verändern.

7. Computerprogramm, das dazu eingerichtet ist, alle Schritte eines Verfahrens nach Anspruch 6 durchzuführen.

8. Maschinenlesbares Speichermedium mit einem darauf gespeicherten Computerprogramm nach Anspruch 7.

9. Das Ventil gemäß Anspruch 1 als Einkomponentenventil Aktor-Feder-und Schließkörper vereint und hermetisch dicht den Fluidraum von der Umwelt abtrennt.

## Claims

1. Valve (300) with the following features:
an actuator (304) for controlling a flow of a fluid through the valve (300); and
a valve housing (302), wherein the valve housing (302) has at least one flexible wall (312) which is formed integrally with a rigid remaining region of a wall of the valve housing (302), and no working step, in which the flexible wall is connected to the rigid wall portion of the valve housing, is specified during the production, and which is designed in order to be moved by the actuator (304) so as to change a fluid flow region (326) in the valve housing (302) between an inlet opening (308) for admitting the fluid into the valve (300) and an outlet opening (310) for letting the fluid out of the valve (300), wherein the flexible wall (312) forms a push-in portion (314) of the valve housing (302), which push-in portion lies opposite the inlet opening (308), wherein a guide element (320) of the actuator (304) is arranged in the push-in portion (314) and is designed in order to press a bottom (318) of the push-in portion (314) into the inlet opening (308) counter to a flow direction (322) of the fluid in the fluid flow region (326) in order to close the inlet opening (308).

2. Valve (300) according to Claim 1, **characterized in that** the actuator (304) is arranged adjacent to the flexible wall (312) of the valve housing (302) outside the valve housing (302).

3. Valve (300) according to Claim 1 or 2, **characterized in that** the push-in portion (314) has a folded structure (316) which is folded in the manner of a concertina and is designed in order to be stretched in the direction of the inlet opening (308).

4. Valve (300) according to one of Claims 1 to 3, **characterized in that** the guide element (320) is fixed on the push-in portion (314).

5. Valve (300) according to one of the preceding claims, **characterized in that** the valve housing (302) is designed as a receiving chamber (306), which is closed in a fluid tight manner in relation to the actuator (304), for temporarily accommodating the fluid.

6. Method (700) for using a valve (300), wherein the valve (300) has an actuator (304) for controlling a flow of a fluid through the valve (300); and
a valve housing (302), wherein the valve housing (302) has at least one flexible wall (312) which is formed integrally with a rigid remaining region of a wall of the valve housing (302), and no working step, in which the flexible wall is connected to the rigid wall portion of the valve housing, is specified during the production, and which is designed in order to be moved by the actuator (304), wherein the flexible wall (312) forms a push-in portion (314) of the valve housing (302), which push-in portion lies opposite the inlet opening (308), wherein a guide element (320) of the actuator (304) is arranged in the push-in portion (314) and is designed in order to press a bottom (318) of the push-in portion (314) into the inlet opening (308) counter to a flow direction (322) of the fluid in the fluid flow region (326) in order to close the inlet opening (308), wherein the method (700) has the following step:
outputting (702) a control signal to the actuator (304) in order to have the effect that the actuator (304) moves the flexible wall (312) so as to change a fluid flow region (326) in the valve housing (302) between an inlet opening (308) for admitting the fluid into the valve (300) and an outlet opening (310) for letting the fluid out of the valve (300).

7. Computer program which is designed to carry out all of the steps of a method according to Claim 6.

8. Machine-readable storage medium with a computer program according to Claim 7 stored thereon.

9. Valve according to Claim 1 combining actuator, spring and closing body as a single-component valve and hermetically tightly separating the fluid space from the environment.

## Revendications

1. Soupape (300) avec les caractéristiques suivantes :
un actionneur (304) pour commander un débit d'un fluide traversant la soupape (300) ; et
un carter de soupape (302), le carter de soupape (302) comportant au moins une paroi flexible (312) formée d'un seul tenant avec une zone restante rigide d'une paroi du carter de soupape (302) et aucune étape de travail n'étant prédéfinie lors de la fabrication, la paroi flexible étant reliée à la section de paroi rigide du carter de soupape et étant réalisée pour être déplacée par l'actionneur (304) pour modifier une zone d'écoulement fluide (326) dans le carter de soupape (302) entre une ouverture d'admission (308) prévue pour admettre le fluide dans la soupape (300) et une ouverture de sortie (310) prévue pour faire sortir le fluide hors de la soupape (300) ;
la paroi flexible (312) formant une section rentrante (314), opposée à l'ouverture d'admission (308) du carter de soupape (302), un élément de guidage (320) de l'actionneur (304) étant disposé et réalisé dans la section rentrante (314), pour comprimer un fond (318) de la section rentrante (314) à l'encontre d'une direction d'écoulement (322) du fluide dans la zone d'écoulement fluide (326) dans l'ouverture d'admission (308), pour fermer l'ouverture d'admission (308).

2. Soupape (300) selon la revendication 1, **caractérisée en ce que** l'actionneur (304) est disposé à l'extérieur du carter de soupape (302) à proximité de la paroi flexible (312) du carter de soupape (302).

3. Soupape (300) selon la revendication 1 ou 2, **caractérisée en ce que** la section rentrante (314) comporte une structure de plis (316) pliée de type en accordéon réalisée pour être étirée en direction de l'ouverture d'admission (308).

4. Soupape (300) selon l'une quelconque des revendications 1 à 3, **caractérisée en ce que** l'élément de guidage (320) est fixé à la section rentrante (314).

5. Soupape (300) selon l'une quelconque des revendications précédentes, **caractérisée en ce que** le carter de soupape (302) est réalisé sous la forme d'un compartiment de logement (306) fermé de façon étanche aux fluides par rapport à l'actionneur (304) de façon à recevoir temporairement du fluide.

6. Procédé (700) d'utilisation d'une soupape (300), la soupape (300) comportant un actionneur (304) pour commander un débit d'un fluide traversant la soupape (300) et un carter de soupape (302), le carter de soupape (302) comportant au moins une paroi flexible (312) formée d'un seul tenant avec une zone restante rigide d'une paroi du carter de soupape (302) et aucune étape de travail n'étant prédéfinie lors de la fabrication, la paroi flexible (312) formant une section rentrante (314), opposée à l'ouverture d'admission (308) du carter de soupape (302), un élément de guidage (320) de l'actionneur (304) étant disposé et réalisé dans la section rentrante (314), pour comprimer un fond (318) de la section rentrante (314) à l'encontre d'une direction d'écoulement (322) du fluide dans la zone d'écoulement fluide (326) dans l'ouverture d'admission (308), pour fermer l'ouverture d'admission (308), le procédé (700) comportant l'étape suivante :
envoi (702) d'un signal de commande à l'actionneur (304), pour provoquer le déplacement par l'actionneur (304) de la paroi flexible (312), pour faire varier une zone d'écoulement fluide (326) dans le carter de soupape (302) entre une ouverture d'admission (308) en vue d'admettre le fluide dans la soupape (300) et une ouverture de sortie (310) pour faire sortir le fluide hors de la soupape (300).

7. Programme informatique, conçu pour exécuter toutes les étapes d'un procédé selon la revendication 6.

8. Support de mémoire lisible par machine avec un programme informatique selon la revendication 7 mémorisé dessus.

9. Soupape selon la revendication 1 prenant la forme d'une soupape à composant unique réunissant un corps d'actionneur, de ressort et de fermeture et isolant de façon étanche et hermétique la chambre de fluide par rapport à l'environnement.
